(19) Europäisches Patentamt / European Patent Office / Office européen des brevets

(11) **EP 2 009 724 B1**

(12) **EUROPEAN PATENT SPECIFICATION**

(45) Date of publication and mention of the grant of the patent: **26.10.2011 Bulletin 2011/43**

(21) Application number: **07741909.1**

(22) Date of filing: **12.04.2007**

(51) Int Cl.:
***H01M 8/02*** *(2006.01)* ***H01B 1/06*** *(2006.01)*
***H01B 13/00*** *(2006.01)* ***H01M 8/10*** *(2006.01)*

(86) International application number: **PCT/JP2007/058473**

(87) International publication number: **WO 2007/119868 (25.10.2007 Gazette 2007/43)**

(54) **METHOD FOR PRODUCING POLYMER ELECTROLYTE MEMBRANE, POLYMER ELECTROLYTE MEMBRANE AND DIRECT METHANOL FUEL CELL**

VERFAHREN ZUM HERSTELLEN EINER POLYMER-ELEKTROLYTMEMBRAN, POLYMER-ELEKTROLYTMEMBRAN UND DIREKTMETHANOL-BRENNSTOFFZELLE

MÉTHODE DE PRODUCTION DE MEMBRANE ÉLECTROLYTE POLYMÈRE, MEMBRANE ÉLECTROLYTE POLYMÈRE ET PILE À COMBUSTIBLE DIRECTE AU MÉTHANOL

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **13.04.2006 JP 2006110538**

(43) Date of publication of application: **31.12.2008 Bulletin 2009/01**

(73) Proprietor: **Sumitomo Chemical Company, Limited**
**Tokyo 104-8260 (JP)**

(72) Inventors:
- **HASEGAWA, Hirohiko**
  **Niihama-shi, Ehime (JP)**
- **YAMADA, Takashi**
  **Tsukuba-shi**
  **Ibaraki 305-0821 (JP)**

(74) Representative: **Vossius & Partner**
**Siebertstrasse 4**
**81675 München (DE)**

(56) References cited:
**WO-A1-2005/119822**
**JP-A- 10 021 943**
**JP-A- 56 090 803**
**JP-A- 2001 250 567**
**JP-A- 2001 319 521**
**JP-A- 2004 018 573**
**JP-A- 2004 161 956**
**JP-A- 2004 165 096**
**JP-A- 2006 210 166**

- **DATABASE WPI Week 200425 Thomson Scientific, London, GB; AN 2004-260999 XP002564789 & JP 2004 018573 A (KANEKA CORP) 22 January 2004 (2004-01-22)**
- **DATABASE WPI Week 200447 Thomson Scientific, London, GB; AN 2004-491541 XP002564790 & JP 2004 165096 A (ASAHI KASEI KK) 10 June 2004 (2004-06-10)**
- **DATABASE WPI Week 200549 Thomson Scientific, London, GB; AN 2005-482649 XP002564791 & JP 2005 171025 A (JSR CORP) 30 June 2005 (2005-06-30)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 009 724 B1

## Description

### TECHNICAL FIELD

The present invention relates to a method for producing a polymer electrolyte membrane preferable for a direct methanol fuel cell. In addition, the invention relates to the use of a membrane-electrode assembly obtained by the producing method in a direct methanol fuel cell.

### BACKGROUND ART

In recent years, a solid polymer fuel cell is attracting attention as an energy device for houses and power of automobiles. Among them, a direct methanol fuel cell using methanol as fuel is attracting attention for use as an electric source of personal computers and portable equipment by reason of being capable of downsizing these.

In the direct methanol fuel cell (hereinafter referred to as a "DMFC"), a methanol aqueous solution as fuel is supplied to a fuel electrode. On that occasion, when a proton conductive membrane between the fuel electrode and an air electrode has low barrier properties to methanol (methanol barrier properties), a phenomenon of methanol crossover (hereinafter referred to as "MCO") of methanol permeating through the conductive membrane to shift to the air electrode, is observed. The occurrence of MCO in this manner causes a problem that power generating performance is decreased and methanol leaks out of the air electrode to cause damage to the cell itself. Thus, a membrane excellent in methanol barrier properties is earnestly desired as the proton conductive membrane used for the direct methanol fuel cell.

Incidentally, a perfluoroalkane polymer electrolyte membrane such as Nafion (a registered trademark of DuPont) is mainly used as a polymer electrolyte used for the proton conductive membrane of the solid polymer fuel cell. However, the development of an inexpensive and high-performance hydrocarbon polymer electrolyte membrane instead of this membrane is accelerated for the reason that the perfluoroalkane polymer electrolyte membrane is expensive and insufficient in heat resistance and mechanical strength. It is known that the hydrocarbon electrolyte membrane is excellent in methanol barrier properties as compared with the perfluoroalkane polymer electrolyte membrane; however, methanol barrier properties and the proton conductivity relevant to power generating performance generally conflict with each other, and it is difficult to produce the proton conductive membrane in which these two properties may be compatible at a high level (commissioned business by New Energy and Industrial Technology Development Organization, Heisei 15th Progress Report).

The application of a cross-linked membrane obtained by cross-linking a polymer electrolyte membrane is extensively studied as a method for improving methanol barrier properties; for example, a proton (ion) conductive membrane in which a polymer electrolyte having a cyano group in a molecule is heat-treated (thermally cross-linked) at a temperature of 200°C or more is disclosed in JP No. 2005-243492A (paragraph [0024], Examples).

### DISCLOSURE OF THE INVENTION

However, when the degree of cross-linking in the above-mentioned cross-linked membrane is raised for high-level methanol barrier properties, toughness of the obtained cross-linked membrane tends to be deteriorated; when it is applied to a fuel cell, deterioration with time is caused in the membrane by hygroscopic swelling and drying shrinkage of the membrane with operation and stop thereof, and consequently durability of the fuel cell itself tends to be deteriorated.

The present invention provides a method for producing a polymer electrolyte membrane capable of achieving high-level methanol barrier properties and the proton conductivity without using a method of cross-linking the polymer electrolyte membrane, which brings about such durability decrease.

The inventors of the present invention have completed the present invention through earnest studies for solving the above-mentioned problem.

That is to say, the present invention provides a method for producing a polymer electrolyte membrane described in the following [1].

[1] A method for producing a polymer electrolyte membrane comprising the step of modifying a polymer electrolyte membrane which is salt-substituted with a polyvalent cation, by a modification treatment selected from a heat treatment, an active energy ray irradiation treatment and a discharge treatment.

Here, "salt-substituted" means that a part or all of hydrogen ions bonding ionically to a cation exchange group of a polymer electrolyte composing a polymer electrolyte membrane are ion-exchanged for a cation except a hydrogen ion. That is, salt substitution with a polyvalent cation means that when ionic valency of the polyvalent cation is regarded as n valency (n denotes an integer of 2 or more and typically 5 or less), n of cation exchange groups bond ionically to one polyvalent cation to become a group in the form of a salt.

In addition, the present invention provides a method for producing a polymer electrolyte membrane described in the following [2] from the viewpoint of further improving the proton conductivity of the obtained polymer electrolyte

membrane.

[2] A method for producing a polymer electrolyte membrane comprising the step of modifying a polymer electrolyte membrane which is salt-substituted with a polyvalent cation, by a modification treatment selected from a heat treatment, an active energy ray irradiation treatment and a discharge treatment, and the step of treating the modified polymer electrolyte membrane with acid.

The modification treatment in the above-mentioned [1] or [2] is preferably a heat treatment as described in the following [3], particularly a heat treatment in a temperature range of 40°C to 200°C as described in the following [4] by reason of being convenient for production.

[3] The method for producing a polymer electrolyte membrane according to the above-mentioned [1] or [2], in which the above-mentioned modification treatment is a heat treatment.

[4] The method for producing a polymer electrolyte membrane according to the above-mentioned [1] or [2], in which the above-mentioned modification treatment is a heat treatment in a temperature range of 40°C to 200°C.

In addition, the present invention provides the following [5], [6] and [7] preferable for the above-mentioned polymer electrolyte membrane which is salt-substituted with a polyvalent cation.

[5] The method for producing a polymer electrolyte membrane according to any one of the above-mentioned [1] to [4], in which the salt substitution ratio of the above-mentioned polymer electrolyte membrane which is salt-substituted with a polyvalent cation is 50% or more.

[6] The method for producing a polymer electrolyte membrane according to any one of the above-mentioned [1] to [5], in which the above-mentioned polyvalent cation is an alkaline earth metal ion.

[7] The method for producing a polymer electrolyte membrane according to any one of the above-mentioned [1] to [6], in which the above-mentioned polyvalent cation contains a calcium (II) ion.

Here, the "salt substitution ratio" means a ratio of the number of groups ion-exchanged for a cation except a hydrogen ion to the total number of cation exchange groups, and in the present invention, is a ratio of the number of cation exchange groups salt-substituted with a polyvalent cation to the total number of cation exchange groups among cation exchange groups of a polymer electrolyte composing a polymer electrolyte membrane.

In addition, the polymer electrolyte membrane applied to the present invention is preferably a membrane composed of an aromatic polymer electrolyte as described in the following [8], and a membrane composed of a block copolymer comprising a block having a cation exchange group and a block having substantially no ion exchange group as described in the following [9] by reason of being excellent in heat resistance and mechanical strength of the membrane.

[8] The method for producing a polymer electrolyte membrane according to any one of the above-mentioned [1] to [7], in which a polymer electrolyte composing the above-mentioned polymer electrolyte membrane is an aromatic polymer electrolyte.

[9] The method for producing a polymer electrolyte membrane according to any one of the above-mentioned [1] to [8], in which a polymer electrolyte composing the above-mentioned polymer electrolyte membrane is a block copolymer consisting of a block having a cation exchange group and a block having substantially no ion exchange group.

Also, the present invention provides a polymer electrolyte membrane described in the following [10].

[10] A polymer electrolyte membrane obtained by the method for producing a polymer electrolyte membrane according to any one of the above-mentioned [1] to [9].

In addition, the present invention provides [11] particularly preferable for a member of a direct methanol fuel cell among the above-mentioned [10].

[11] The polymer electrolyte membrane according to the above-mentioned [10], characterized in that the methanol diffusion coefficient D ($cm^2/s$) and the proton conductivity σ (S/cm) satisfy the following expression (1).

$$D/\sigma \leqq 9.5 \times 10^{-6} \quad (1)$$

The above-mentioned polymer electrolyte membrane provides the following [12] and [13] preferable for a direct methanol fuel cell.

[12] A membrane-electrode assembly obtained by forming a catalyst layer on both sides of the polymer electrolyte membrane according to the above-mentioned [10] or [11].

[13] A direct methanol fuel cell including the membrane-electrode assembly according to the above-mentioned [12].

BEST MODE FOR CARRYING OUT THE INVENTION

A polymer electrolyte composing the polymer electrolyte membrane applied to a production method of the present invention has a cation exchange group as an ion exchange group, and typical examples of such a polymer

electrolyte include:

(A) a polymer electrolyte in which a cation exchange group is introduced into a hydrocarbon polymer having aliphatic hydrocarbon as a main chain;
(B) a hydrocarbon polymer electrolyte in which a cation exchange group is introduced into a polymer having an aromatic ring in a main chain;
(C) a polymer electrolyte in which a cation exchange group is introduced into a polymer comprising aliphatic hydrocarbon and an inorganic unit structure such as a siloxane group or a phosphagen group as a main chain; and
(D) a polymer electrolyte in which a cation exchange group is introduced into a copolymer comprising repeating units of any two kinds or more selected from repeating units composing a polymer of the above-mentioned (A) to (C) before introducing a cation exchange group thereinto; any of these may be used.

Among the above-mentioned examples, an aromatic polymer electrolyte is preferable from the viewpoint of heat resistance and easiness of recycling. The aromatic polymer electrolyte means a polymer compound having an aromatic ring in a main chain of a polymer chain and having a cation exchange group in a side chain and/or a main chain. The aromatic polymer electrolyte soluble in a solvent is typically used and is preferable by reason of being capable of being easily formed into a membrane by a known solution casting method.

The cation exchange group of the aromatic polymer electrolyte may directly substitute an aromatic ring composing a main chain of the polymer, bond to an aromatic ring composing a main chain through a linking group, or be a combination thereof.

A "polymer having an aromatic ring as a main chain" means the polymer in which divalent aromatic groups are linked to compose a main chain, such as polyarylene, and the polymer in whch divalent aromatic groups are linked through a divalent group to compose a main chain. Examples of the divalent group include an oxy group, a thioxy group, a carbonyl group, a sulfinyl group, a sulfonyl group, an amide group (-C(=O)NH- or -NHC(=O)-), an ester group (-C(=O)O- or -OC(=O)-), a carbonate group (-OC(=O)O-), an alkylene group having approximately 1 to 4 carbon atoms, an alkenylene group having approximately 2 to 4 carbon atoms and an alkynylene group having approximately 2 to 4 carbon atoms. Examples of the aromatic group include aromatic groups such as a phenylene group, a naphthylene group, an anthracenylene group and a fluorenediyl group, and aromatic heterocyclic groups such as a pyridinediyl group, a furandiyl group, a thiophenediyl group, an imidazolyl group, an indolediyl group and a quinoxalinediyl group.

The divalent aromatic group may have a substituent in addition to a cation exchange group; examples of the substituent include an alkyl group having 1 to 20 carbon atoms, an alkoxy group having 1 to 20 carbon atoms, an aryl group having 6 to 20 carbon atoms, an aryloxy group having 6 to 20 carbon atoms, a halogeno group and a nitro group.

Typical examples of the aromatic polymer electrolyte include each of polymers such as polyether ketone, polyether ether ketone, polysulfone, polyether sulfone, polyether ether sulfone, poly(arylene ether), polyimide, polyphenylene, poly((4'-phenoxybenzoyl)-1,4-phenylene), polyphenylene sulfide and polyphenyl quinoxalene, into which polymers a cation exchange group is introduced, sulfoarylated polybenzimidazole, sulfoalkylated polybenzimidazole, phosphoalkylated polybenzimidazole (for example, refer to JP No. 9-110982A), and phosphonated poly(phenylene ether) (for example, refer to J. Appl. Polym. Sci., 18, 1969 (1974)).

A preferable aromatic polymer electrolyte is the aromatic polymer exemplified in the above having a cation exchange group, preferably a polymer electrolyte capable of obtaining a membrane having together a portion having a cation exchange group for contributing to the proton conductivity and a portion having substantially no ion exchange group for contributing to mechanical strength, that is, a function-separated (phase-separated) membrane when the aromatic polymer electrolyte is formed into a membrane. Examples thereof include an alternating copolymer and a random copolymer having one or more of each of a repeating unit with a cation exchange group introduced therein and a repeating unit with substantially no ion exchange group introduced therein (for example, refer to JP No. 11-116679A), and a block copolymer having one or more of each of a block with a cation exchange group introduced therein and a block with substantially no ion exchange group introduced therein (for example, refer to JP No. 2001-250567A).

Among them, the above-mentioned block copolymer is preferable for the reason that each of a block having a cation exchange group and a block having substantially no ion exchange group forms a domain in the membrane to obtain a preferable phase separation membrane. Preferable examples of the cation exchange group include a sulfonic group ($-SO_3H$), a phosphonic group ($-PO_3H_2$), a sulfonylimide group ($-SO_2-NH-SO_2-$) and a combination thereof. Among them, the block copolymer in which the cation exchange group is a sulfonic group is particularly preferable.

With regard to the above-mentioned polymer electrolyte, the optimum molecular weight range may be properly measured from a structure thereof, and is preferably 1000 to 1000000 generally represented by the number-average molecular weight in terms of polystyrene by a GPC (gel permeation chromatography) method. The lower limit of the number-average molecular weight is preferably 5000 or more, particularly 10000 or more, while the upper limit thereof is preferably 500000 or less, particularly 300000 or less.

When the number-average molecular weight of 1000 or more, membrane strength tends to improve more,

while when the number-average molecular weight of 1000000 or less, solubility of the polymer electrolyte in a solvent becomes favorable and the solution viscosity of the solution obtained by dissolving the polymer electrolyte in a solvent decreases, so that membrane formation by a solution casting method is facilitated, whereby the above-mentioned molecular weight range is preferable.

Next, a method for forming a polymer electrolyte into a membrane by a solution casting method is described.

First, a polymer electrolyte is dissolved in a proper solvent, and the obtained polymer electrolyte solution is subjected to cast coating onto a supporting substrate and the solvent is removed and thereby a polymer electrolyte membrane on the supporting substrate is produced, and subsequently the polymer electrolyte membrane is peeled off from the supporting substrate.

This solution casting method is particularly preferable for a method for obtaining a polymer electrolyte membrane concerning the present invention by reason of convenient handling.

The solvent used for the solution casting method is not particularly limited as long as it is capable of dissolving a polymer electrolyte and thereafter being removed; examples of the solvent used preferably include aprotic polar solvents such as N,N-dimethylformamide (hereinafter referred to as "DMF"), N,N-dimethylacetamide (hereinafter referred to as "DMAc"), N-methyl-2-pyrrolidone (hereinafter referred to as "NMP") and dimethyl sulfoxide (hereinafter referred to as "DMSO"), chlorinated solvents such as dichloromethane, chloroform, 1,2-dichloromethane, chlorobenzene and dichlorobenzene, alcohols such as methanol, ethanol and propanol, and alkylene glycol monoalkyl ethers such as ethylene glycol monomethyl ether, ethylene glycol monoethyl ether, propylene glycol monomethyl ether and propylene glycol monoethyl ether.

These solvents may be used singly or by mixing two kinds or more as required. Among them, DMF, DMAc, NMP and DMSO are preferable for the reason that solubility of a polymer electrolyte therein is high.

The supporting substrate used for the solution casting method is not particularly limited as long as it is not swollen or dissolved in the above-mentioned polymer electrolyte solution and the membrane obtained after being formed is peelable; examples of the supporting substrate used preferably include glass, stainless-steel materials, stainless-steel belts and polyethylene terephthalate (PET) membranes. The substrate surface may be subjected to a release treatment, a mirror treatment, an embossing treatment and a frosted treatment as required. A membrane in which the above-mentioned polymer electrolyte is retained by a porous support may be used for producing the polymer electrolyte membrane of the present invention.

The concentration of the polymer electrolyte used for the solution casting method in the polymer electrolyte solution is typically 5 to 40% by weight, preferably 5 to 30% by weight although it depends on the molecular weight of the used polymer electrolyte itself.

It is preferable that the polymer electrolyte concentration is 5% by weight or more since the concentration allows a membrane with a practical membrane thickness to be easily processed, while the polymer electrolyte concentration is 40% by weight or less, the solution viscosity of the obtained solution is decreased, so that a membrane with a smooth surface is easily obtained.

The membrane thickness of the polymer electrolyte membrane thus obtained is not particularly limited, and it is preferably 5 to 200 μm, more preferably 8 to 100 μm and furthermore preferably 15 to 80 μm in terms of a membrane thickness when substantially all of the cation exchange groups in the polymer electrolyte membrane are groups of free acid. The polymer electrolyte membrane is preferably 5 pm or thicker for obtaining membrane strength preferable for practical use, and preferably 200 μm or thinner for decreasing membrane resistance, that is, improving power generating performance. The membrane thickness may be controlled into a desired range in accordance with the polymer electrolyte concentration or coating thickness to the substrate of the above-mentioned polymer electrolyte solution, and on that occasion, the membrane thickness of the salt-substituted polymer electrolyte membrane obtained by the solution casting method is controlled in consideration of the membrane thickness of the polymer electrolyte membrane when the salt substitution ratio of the polymer electrolyte membrane is approximately 0%.

Next, the details of a method for producing a modified polymer electrolyte membrane of the present invention are described.

First, a part or all of monovalent cations bonding ionically to a cation exchange group in the polymer electrolyte membrane exemplified in the above are substituted with polyvalent cations. Ion exchange reaction may be used as a method for substitution.

Here, examples of a method for producing a polymer electrolyte membrane by using the ion exchange reaction include:

(i) a method for previously ion-exchanging a part or all of monovalent cations bonding ionically to cation exchange groups of a polymer electrolyte for polyvalent cations to thus form the ion-exchanged polymer electrolyte into a membrane; and

(ii) a method for forming a polymer electrolyte, in which substantially all of cation exchange groups bond ionically

to monovalent cations, into a membrane by a solution casting method to then ion-exchange a part or all of the monovalent cations bonding ionically to the cation exchange groups of the obtained polymer electrolyte membrane for polyvalent cations;

and either (i) or (ii), or a combination thereof may be used.

First, the above-mentioned method (i) is described.

The method is a method for ion-exchanging monovalent cations bonding ionically to cation exchange groups for polyvalent cations by using hydroxide and chloride (hereinafter generically named "polyvalent cation salt substituting agent") of the polyvalent cations to the cation exchange groups in a polymer electrolyte.

Specifically, the method is one in which a polymer electrolyte is previously dissolved or dispersed in water, an organic solvent or a water/organic solvent mixed solvent, and a polyvalent cation salt substituting agent is added thereto to ion-exchange (salt-substitute) a part or all of monovalent cations bonding ionically to cation exchange groups in a polymer electrolyte for polyvalent cations. Here, the total number of cation exchange groups ion-exchanged for polyvalent cations with respect to the total number of cation exchange groups in the polymer electrolyte (salt substitution ratio) may be calculated from molar equivalent of polyvalent cations in a polyvalent cation salt substituting agent to be contacted and the ion exchange capacity of the polymer electrolyte (measured by a titration method after substantially all of cation exchange groups of the polymer electrolyte are once made to groups of free acid). In the case where almost all of the cation exchange groups are ion-exchanged for polyvalent cations, a polyvalent cation salt substituting agent may be used large excessively with respect to the above-mentioned ion exchange capacity. In the case where ion exchange ability of the cation exchange groups in the polymer electrolyte used is low (for example, in the case where the cation exchange groups are phosphonic groups), the use of a salt such as a chloride of polyvalent cations for a polyvalent cation salt substituting agent occasionally causes the polymer electrolyte having a desired salt substitution ratio with respect to the number of used equivalent of the polyvalent cation salt substituting agent to be hardly obtained. In this case, a preliminary experiment may be performed such that the used amount of the polyvalent cation salt substituting agent is gradually increased from the degree for allowing a desired salt substitution ratio to measure the salt substitution ratio of the obtained polymer electrolyte and measure the number of equivalent of the polyvalent cation salt substituting agent for allowing a desired salt substitution ratio. In the case where the cation exchange groups of the polymer electrolyte are preferable sulfonic groups, the polymer electrolyte generally has so high ion exchange ability as to bring the advantage that the number of equivalent of the used polyvalent cation salt substituting agent allows the polymer electrolyte having a desired salt substitution ratio to be easily obtained.

Water, an organic solvent or a water/organic solvent mixed solvent may be used as a solvent in (i), and a solvent containing water is preferable for the reason to be described in the following. The treating time for ion exchange is typically 10 minutes to 500 hours, preferably 0.5 to 400 hours, more preferably 1 to 350 hours, and approximately room temperature is typically sufficient for the treating temperature.

Here, in the case where the above-mentioned monovalent cations are hydrogen ions, the above-mentioned (i) may be also performed, for example, in conformity to the method described in JP No. 2005-171025A.

Even though the polyvalent cation salt substituting agent is previously added and dissolved in water, an organic solvent or a water/organic solvent mixed solvent to thereafter put the polymer electrolyte into this solution, the equal effect is obtained and the order of charging is not particularly limited.

In the process for producing the polymer electrolyte, when the polymer electrolyte in which a part or all of the cation exchange groups thereof are salt-substituted with polyvalent cations is obtained, the polymer electrolyte may be directly formed into a membrane by a solution casting method or the like.

Here, in the case where most of the cation exchange groups in the above-mentioned polymer electrolyte are ion-exchanged for polyvalent cations, solubility in a typical solvent is occasionally decreased, so that a membrane forming method except a solution casting method, such as extrusion molding, may be used on that occasion.

Next, the above-mentioned method (ii) is described.

First, a solution (hereinafter referred to as a "polyvalent cation solution") in which a polyvalent cation salt substituting agent is dissolved or dispersed in water and/or an organic solvent is prepared, and a polymer electrolyte membrane (almost all of cation exchange groups bond ionically to monovalent cations) previously formed into a membrane by a solution casting method is contacted with the polyvalent cation solution for 10 minutes to 500 hours, preferably 0.5 to 400 hours, more preferably 1 to 350 hours. Approximately room temperature is typically sufficient for the contact temperature.

Examples of a method for contacting the above-mentioned polyvalent cation solution with the polymer electrolyte membrane include a method for immersing the polymer electrolyte membrane in the polyvalent cation solution and a method for spraying the polymer electrolyte membrane with the polyvalent cation solution. Thus, a method for contacting the polyvalent cation solution with the polymer electrolyte membrane is not limited and yet the immersion method is preferable from the viewpoint that the treating time and treating temperature are controlled stably and easily, and reaction reproducibility of ion exchange is increased.

In addition, the polyvalent cation solution may be stirred in the immersion method without deteriorating the form of the immersed polymer electrolyte membrane.

The amount of ion-exchanged polyvalent cations with respect to the total number of cation exchange groups of the polymer electrolyte membrane (salt substitution ratio) may be estimated from molar equivalent of polyvalent cations in the polyvalent cation solution to be contacted and the ion exchange capacity of the polymer electrolyte membrane (measured by a titration method after substantially all of cation exchange groups of the polymer electrolyte membrane are once made to groups of free acid); in the case where almost all of the cation exchange groups are ion-exchanged, molar equivalent of polyvalent cations may be used large excessively with respect to the above-mentioned ion exchange capacity.

The above-mentioned polyvalent cations are not particularly limited as long as the ionic valency thereof is divalence or more. Examples thereof include alkaline earth metal ions such as magnesium, calcium and barium, nontransition metal ions such as aluminum, and transition metal ions such as tin and zinc.

A compound having a plurality of quaternary ammonium groups in a molecule may be used.

These polyvalent cations may be used singly or in plural kinds.

Specific examples of the above-mentioned polyvalent cation salt substituting agent include magnesium hydroxide, calcium hydroxide, barium hydroxide, aluminum hydroxide, zinc hydroxide, magnesium chloride, calcium chloride, barium chloride, aluminum chloride, tin chloride, zinc chloride, magnesium bromide, calcium bromide, barium bromide, tin bromide, zinc bromide, calcium acetate, barium acetate and zinc acetate.

A compound having two or more quaternary ammonium groups in a molecule is allowable; hydroxides and chlorides of polyvalent ions having a plurality of quaternary ammonium groups may be used, such as bis(trimethylammonio)ethylene, bis(trimethylammonio)propylene, bis(trimethylammonio)benzene, bis(triethylammonio)benzene, tris (trimethylammonio)benzene and tris(triethylammonio)benzene.

Among the polyvalent cations exemplified in the above, alkaline earth metal ions, nontransition metal ions and transition metal ions are preferable, alkaline earth metal ions are more preferable, and among them, a calcium (II) ion is particularly preferable for the polyvalent cations for further improving methanol barrier properties.

In the case where monovalent cations bonding ionically to cation exchange groups of the polymer electrolyte are ion-exchanged for polyvalent cations, polyvalent cations are typically higher in ion selectivity in ion exchange reaction than monovalent cations so that it is easily ion-exchanged.

Examples of monovalent cations bonded to cation exchange groups before being salt-substituted with polyvalent cations include hydrogen ions or alkali metal ions (such as lithium ions, sodium ions and potassium ions); hydrogen ions are typically preferable in the present invention, that is, cation exchange groups of the polymer electrolyte in which cation exchange groups are groups of free acid are preferably ion-exchanged.

The lower limit of the salt substitution ratio in the polymer electrolyte membrane salt-substituted with polyvalent cations obtained as the above may be optimized by desired methanol permeability in the obtained polymer electrolyte membrane, and it is preferably 50% or more, more preferably 80% or more and particularly preferably 100%, namely, substantially all of cation exchange groups are salt-substituted.

Here, the definition of the "salt substitution ratio" is as described above.

Next, the above-mentioned modification treatment is described.

As described above, the inventors of the present invention have found out that the polymer electrolyte membrane in which methanol barrier properties and the proton conductivity are compatible at a high level is obtained by modifying the polymer electrolyte membrane salt-substituted with polyvalent cations by a heat treatment, an active energy ray irradiation treatment, a discharge treatment or a combination thereof. The mechanism is not apparent but it is assumed that micro or macro morphology of the polymer electrolyte membrane restrains methanol permeability and allows a membrane with a phase-separated structure for allowing high proton conducting path by reason of providing physical energy for the polymer electrolyte membrane, such as the modification treatments. That is to say, as a proton conductive membrane for a direct methanol fuel cell disclosed so far, the method for restraining methanol permeability by cross-linking the polymer electrolyte by a process to densify the membrane restrains the proton conducting path itself; on the contrary, it is assumed that the polymer electrolyte membrane obtained by a production method of the present invention may become a polymer electrolyte membrane with a preferable oriented state formed, having a proton conducting path while restraining methanol permeation.

Here, an active energy ray irradiation treatment means a method for irradiating any active energy ray selected from electromagnetic waves or particle rays such as α-rays, β-rays, neutron rays, electron rays, γ-rays, X-rays, vacuum ultraviolet rays, ultraviolet rays, visible light rays, infrared rays, microwaves, radio waves and laser. On the other hand, a discharge treatment is a method selected from discharge treatments such as a corona discharge treatment, a glow discharge treatment and a plasma treatment (including a low-temperature plasma treatment).

Among these, an active energy ray irradiation treatment is preferably a treatment for irradiating active energy ray selected from X-rays, electron rays, ultraviolet rays, visible light rays, infrared rays, microwaves or laser, and more preferably a method for irradiating radial rays selected from ultraviolet rays, visible light rays, infrared rays, microwaves

or laser. These active energy rays are preferable for the reason that the membrane tends to be less overheated by irradiation and the deterioration of the membrane is hardly caused.

A discharge treatment is preferably a low-temperature plasma treatment; the reason therefore is also that the membrane tends to be less overheated.

The above-mentioned active energy ray irradiation treatment and discharge treatment may be performed pursuant to the apparatus and method typically used for a surface modification treatment of a polymeric film; for example, the method described in the document ("HYOUMEN KAISEKI KAISITU NO KAGAKU"(Chemistry of Surface Analysis and Modification) edited by The Adhesion Society of Japan, THE NIKKAN KOGYO SHIMBUN, LTD. published on Dec. 19, 2003) may be used.

Here, in performing the above-mentioned active energy ray irradiation treatment or discharge treatment, treating time is preferably within 10 hours, more preferably within 3 hours, even more preferably within 1 hour and particularly preferably within 30 minutes. The atmosphere used for performing these modification treatments is any of hydrogen, helium, nitrogen, ammonia, oxygen, neon, argon, krypton, xenon, acetonitrile and a mixed gas thereof, and the pressure for the modification treatments may be properly optimized depending on the selected treatment.

Among the modification treatments applied to the present invention, a heat treatment is preferable above all and has the advantage that the equipment is simple as compared with the active energy ray irradiation treatment or discharge treatment exemplified in the above.

Here, a preferable heat treatment is described.

Examples of the heat treatment include a method for directly heating the polymer electrolyte membrane salt-substituted with polyvalent cations obtained as described above in an oven, a furnace or an IH hot plate, a method for exposing the polymer electrolyte membrane into high-temperature steam, and a method for immersing the polymer electrolyte membrane in water, an organic solvent or a mixed solvent thereof to heat while slowly stirring the solvent as required.

In the case of using the method for directly heating by an oven, a furnace or an IH hot plate, the heating temperature is preferably 40°C or more and 200°C or less, more preferably 100°C or more and 200°C or less and particularly preferably 150°C or more and 200°C or less. A heating temperature of 40°C or more is preferable by reason of shortening of time for the step of modification, while a heating temperature of 200°C or less is preferable by reason of the tendency to restrain desorption reaction of an ion exchange group and decomposition reaction of a polymer main chain.

The atmosphere in the heat treatment is the same as described in the above-mentioned active energy ray irradiation treatment and discharge treatment, and a heat treatment is performed typically preferably under an inert gas. The pressure may be approximately normal pressure, and either of reduced pressure and pressurization may be used. The treating time is 0.1 to 500 hours, preferably 0.5 to 400 hours and more preferably 1 to 350 hours. With regard to these heat treatments, as described above, it is assumed that both a methanol conducting path and a proton conducting path come to have preferable oriented structures in a phase-separated structure of the polymer electrolyte membrane.

The method for exposing the above-mentioned polymer electrolyte membrane salt-substituted with polyvalent cations to high-temperature steam, and the method for heating the above-mentioned polymer electrolyte membrane salt-substituted with polyvalent cations while immersing in water are preferable by reason of being capable of remarkably improving the effect of the present invention. It is not certain but yet guessed that the polymer electrolyte membrane in a hydrous state improves mobility of a molecular chain of the polymer composing the polymer electrolyte membrane to easily have a preferable oriented structure. In the case using this method, the treating time is 0.1 to 500 hours, preferably 3 to 400 hours and particularly preferably 5 to 350 hours, and the treating temperature is 40°C or more and 200°C or less, preferably 50°C or more and 200°C or less, more preferably 80°C or more and 150°C or less and particularly preferably 120°C or more and 150°C or less. The higher treating temperature allows treatment in a shorter time to further improve methanol barrier properties within a range of not damaging the polymer electrolyte.

In addition, with regard to the heat treatment, the immersion is performed particularly preferably while heating in the method described in the above-mentioned (ii), that is, the method for immersing the polymer electrolyte membrane in the above-mentioned polyvalent cation solution for the reason that ion exchange reaction and the modification treatment may be achieved approximately simultaneously. That is to say, the method for immersing the polymer electrolyte membrane in the above-mentioned polyvalent cation solution to heat the polyvalent cation solution, in which the membrane is thus immersed, is preferable. The treating time is 0.1 to 500 hours, preferably 0.5 to 400 hours and particularly preferably 3 to 350 hours. The treating temperature is 40°C or more and 200°C or less, preferably 50°C or more and 200°C or less, more preferably 80°C or more and 150°C or less and particularly preferably 120°C or more and 150°C or less. Also, in this method, higher temperature allows treatment in a shorter time to further restrain methanol permeability within a range of not damaging the polymer electrolyte.

The proton conductivity may be improved in such a manner that cation exchange groups ion-exchanged for polyvalent cations in the modified polymer electrolyte membrane obtained as described above are ion-exchanged for cation exchange groups to which hydrogen ions bond (groups of free acid). It is preferable that this ion exchange is

conveniently performed by subjecting the above-mentioned modified polymer electrolyte membrane to an acid treatment. The acid treatment allows polyvalent cations or monovalent cations except hydrogen ions bonding ionically to cation exchange groups to be ion-exchanged for hydrogen ions.

Here, the acid treatment may be achieved in such a manner that an acid aqueous solution is prepared so as to be large excessive equivalent ratio (preferably, ten times or more to the equivalent of the ion exchange capacity of the polymer electrolyte membrane) with respect to the total number of cation exchange groups of the polymer electrolyte membrane to be treated (typically measured by the ion exchange capacity of the polymer electrolyte (membrane) in which substantially all of cation exchange groups are made to groups of free acid), and then the modified polymer electrolyte membrane is immersed in the acid aqueous solution.

Acid used for the acid aqueous solution is preferably strong acid; examples thereof include hydrochloric acid, sulfuric acid and nitric acid, and the acid aqueous solution of these acids of approximately 0.1 to 5 normal concentration may be preferably used for the above-mentioned acid treatment.

The polymer electrolyte membrane obtained by a production method of the present invention may be preferably used as a proton conductive membrane for a direct methanol fuel cell. Above all, the polymer electrolyte membrane, in which the methanol diffusion coefficient D ($cm^2/s$) and the proton conductivity σ (S/cm) measured by the method to be described in the following satisfy the following expression (1), may be produced. The polymer electrolyte membrane satisfying the following expression (1) is particularly preferable for a proton conductive membrane applied to a DMFC.

$$D/\sigma \leqq 9.5 \times 10^{-6} \quad (1)$$

The above-mentioned expression (1) means that methanol barrier properties and the proton conductivity are both achieved at a high level, and the polymer electrolyte membrane easily satisfying the above-mentioned expression (1) may be obtained in such a manner that the polymer electrolyte membrane salt-substituted with calcium (II) ions as more preferable polyvalent cations in a production method of the present invention is modified by a heat treatment in a temperature range of 40 to 200°C as a preferable modification treatment. The above-mentioned D/σ is more preferably $9.0 \times 10^{-6}$ or less, particularly preferably $8.5 \times 10^{-6}$ or less.

Next, a DMFC using the polymer electrolyte membrane obtained by a production method of the present invention is described.

A membrane-electrode assembly (hereinafter referred to as an "MEA") used for a DMFC may be produced in such a manner that conductive materials as a catalyst and a current collector are joined to both sides of the polymer electrolyte membrane obtained as described above.

The catalyst is not particularly limited as long as it is capable of activating oxidation-reduction reaction with methanol or oxygen; known catalysts may be used and platinum particulates are preferably used.

The platinum particulates are preferably used while supported by fibrous or particulate carbon such as activated carbon or graphite.

Known materials may be also used for a conductive material as a current collector; a porous carbon nonwoven fabric or carbon paper is preferable by reason of efficiently conveying a source gas to the catalyst.

A known method such as the method described in J. Electrochem. Soc.: Electrochemical Science and Technology, 1988, 135(9), 2209 may be used for a method for joining platinum particulates or carbon supporting platinum particulates to a porous carbon nonwoven fabric or carbon paper, and a method for joining it to the polymer electrolyte membrane; and a known method such as the method described in JP No. 2004-319139A may be used for a method for directly joining platinum particulates or carbon supporting platinum particulates to the membrane.

As described above, an MEA having the polymer electrolyte membrane obtained by a production method of the present invention is obtained. The use of the MEA for a DMFC allows a direct methanol fuel cell excellent in power generating performance, in which damage of the cell due to MCO is remarkably restrained.

The present invention is hereinafter illustrated by referring to examples, but is not limited thereto.

[Molecular weight determination]

GPC measuring apparatus HLC-8220 manufactured by TOSOH CORPORATION

| | |
|---|---|
| Column | TSK-GEL GMHHR-M manufactured by TOSOH CORPORATION |
| Column temperature | 40°C |
| Mobile phase solvent | DMAc (LiBr is added so as to be 10 mmol/$dm^3$) |

(continued)

| | |
|---|---|
| Solvent flow rate | 0.5 mL/min |

[Ion exchange capacity measurement]

The ion exchange capacity (hereinafter referred to as the "IEC") was measured by a titration method.

[Measurement of proton conductivity (σ)]

Membrane resistance was measured by the method described in SHIN JIKKEN KAGAKU KOUZA (Experimental Chemistry Guide Book) 19, polymer chemistry (II), page 992 (edited by The Chemical Society of Japan, Maruzen Co., Ltd.). However, the used cell was made of carbon and a terminal of an impedance measuring apparatus was directly connected to the cell without using a platinum black supported platinum electrode. A polymer electrolyte membrane was first set to the cell to measure resistance value and thereafter measure resistance value again without the polymer electrolyte membrane, whereby membrane resistance was calculated from the difference between both of the values. One mol/L-dilute sulfuric acid was used for the solution contacted with both sides of the polymer electrolyte membrane. The proton conductivity was calculated from the membrane thickness and resistance value in immersing in the dilute sulfuric acid.

[Measurement of methanol diffusion coefficient D]

A polymer electrolyte membrane in which substantially all of cation exchange groups were substituted with groups of free acid was immersed in methanol aqueous solution of 10% by weight-concentration for 2 hours, and thereafter held in the middle of an H-shaped diaphragm cell comprising a cell A and a cell B, and then methanol aqueous solution of 10% by weight-concentration and pure water were put in the cell A and the cell B respectively to analyze the methanol concentration in the cell B at a temperature of 23°C in the initial state and after being left for a certain time t (sec) from the initial state, whereby the methanol diffusion coefficient D ($cm^2$/sec) was calculated from the following expression.

$$D = \{(V \times 1)/(A \times t)\} \times \ln\{(C1 - Cm)/(C2 - Cn)\}$$

Here,
V: volume of liquid in the cell B ($cm^3$),
1: membrane thickness of the polymer electrolyte membrane (cm),
A: cross-sectional area of the polymer electrolyte membrane ($cm^2$),
t: time (sec),
C1: methanol concentration in the cell B in the initial state (mol/ $cm^3$),
C2: methanol concentration in the cell B after being left for a certain time t (mol/ $cm^3$),
Cm: methanol concentration in the cell A in the initial state (mol/ $cm^3$), and
Cn: methanol concentration in the cell A after being left for a certain time t (mol/ $cm^3$).

The methanol permeation amount was so sufficiently small that V was regarded as being a fixed value of the initial pure water volume, and when Cm equals Cn, the initial concentration (10% by weight) was determined.

[Calculation of D/σ]

The preferable polymer electrolyte membrane is a membrane having a high proton conductivity and small methanol diffusion coefficient. For an index thereof, the value of D/σ was calculated as a characteristic parameter from the value calculated in the above. The smaller value means more excellent polymer electrolyte membrane for a DMFC.

[Fuel cell characteristic evaluation]

A membrane-electrode assembly was produced pursuant to the method described in JP No. 2004-319139A.

However, with regard to electrode ink, ink in which ethanol was added to a platinum ruthenium catalyst supported by carbon (manufactured by N. E. CHEMCAT Corporation, Pt/Ru weight ratio = 60/40, amount of platinum supported

of 33% by weight) and a 5% by weight-Nafion solution manufactured by Aldrich Corp. (solvent: a mixture of water and lower alcohol) was used for an anode, and ink in which ethanol was added to a platinum catalyst supported by carbon (manufactured by N. E. CHEMCAT Corporation, amount of platinum supported of 50% by weight) and a 5% by weight-Nafion solution manufactured by Aldrich Corp. (solvent: a mixture of water and lower alcohol) was used for a cathode, and then the ink was directly applied to the membrane so that the platinum amount became 1.0 $g/cm^2$ at both of the electrodes to form a catalyst layer.

With regard to a diffusion layer, carbon paper and carbon cloth were used for the anode and the cathode, respectively. The assembly was retained at a temperature of 40°C to pass a 10% by weight-methanol aqueous solution and an air gas not humidified through the anode and the cathode respectively, and the maximum output density was calculated by measuring power generation characteristics thereof.

Production Example 1 (production example of polymer electrolyte membrane)

Under an argon atmosphere, 600 ml of DMSO, 200 mL of toluene, 26.5 g (106.3 mmol) of sodium 2,5-dichlorobenzenesulfonate, 10.0 g of the following polyether sulfone of terminal chloro type

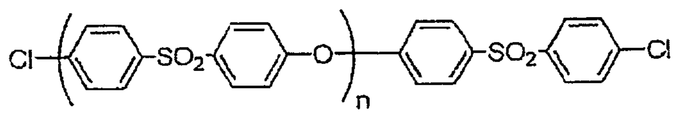

(SUMIKAEXCEL PES5200P, manufactured by Sumitomo Chemical Co., Ltd., Mn = 54000, Mw = 120000) and 43.8 g (280.2 mmol) of 2,2'-bipyridyl were put and stirred in a flask equipped with an azeotropic distillation apparatus. Thereafter, the bath temperature was heated up to 150°C to subject moisture in the system to azeotropic dehydration by distilling off toluene with heat, and thereafter cooled to a temperature of 60°C. Subsequently, 73.4 g (266.9 mmol) of bis(1,5-cyclooctadiene)nickel (0) was added thereto, heated to a temperature of 80°C and stirred at the same temperature for 5 hours. After standing to cool, the reaction liquid was poured into a large amount of a 6 mol/L-hydrochloric acid aqueous solution to thereby precipitate a polymer, which was filtered out. Thereafter, the processes for washing and filtering by a 6 mol/L-hydrochloric acid aqueous solution were repeated several times to thereafter wash the filtrate in water until neutrality and obtain 16.3 g of the following intended block copolymer by drying under reduced pressure. The number-average molecular weight of this block copolymer was 72000 and the weight-average molecular weight was 188000. The representation "block" means a block copolymer in the following formula.

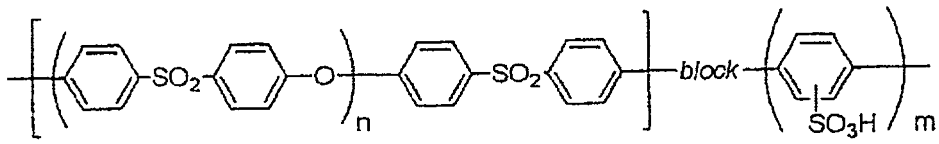

The obtained block copolymer was dissolved in DMAc so as to be 10% by weight-concentration to prepare a polymer electrolyte solution. Thereafter, the obtained polymer electrolyte solution was subjected to cast coating on a glass plate, dried under normal pressure at a temperature of 80°C for 2 hours, whereby the solvent was removed, and thereafter immersed in a 1 mol/L-hydrochloric acid aqueous solution for 2 hours to produce a polymer electrolyte membrane 1 of approximately 30 μm through washing in ion-exchange water.

The IEC of the obtained polymer electrolyte membrane 1 was 2.2 meq/g.

Production Example 2

Under an argon atmosphere, 258 ml of dimethyl sulfoxide (DMSO), 129 ml of toluene, 9.00 g (29.30 mmol) of a sodium 3-(2,5-dichlorophenoxy) propanesulfonate monomer, 5.94 g of the following polyether sulfone of terminal chloro type

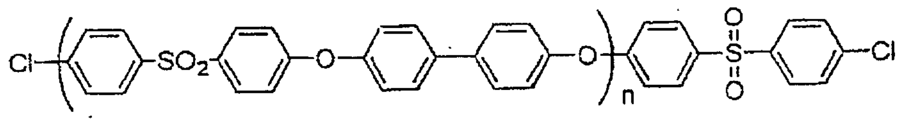

(polyphenylsulfone, manufactured by Aldrich Corp.) and 12.59 g (80.58 mmol) of 2,2'-bipyridyl were put and stirred in a flask equipped with an azeotropic distillation apparatus. Thereafter the bath temperature was heated up to 150°C to subject moisture in the system to azeotropic dehydration by distilling off toluene with heat, and thereafter cooled to a temperature of 70°C. Subsequently, 20.16 g (73.30 mmol) of nickel (0) bis(cyclooctadiene) was added thereto, heated to a temperature of 80°C and stirred at the same temperature for 3 hours. After standing to cool, the reaction liquid was poured into a large amount of methanol to thereby precipitate a polymer, which was filtered. The obtained crude polymer was dispersed and filtered in a 6 mol/L-hydrochloric acid aqueous solution. After the same process was repeated several times, the polymer was dispersed and filtered in a large amount of methanol. After the same work was repeated several times, the obtained polymer was dried. Thereafter, the obtained crude polymer was dissolved in DMSO at a concentration of 5% by weight, and poured into a large amount of a 6 mol/L-hydrochloric acid aqueous solution to thereby reprecipitate and purify a polymer. In addition, the processes for washing and filtering by a 6 mol/L-hydrochloric acid aqueous solution were repeated several times to thereafter wash the filtrate in water until neutrality and obtain 9.68 g of an intended block copolymer by drying under reduced pressure.

The number-average molecular weight of this block copolymer was 16000 and the weight-average molecular weight was 70000. The representation "block" means a block copolymer in the following formula.

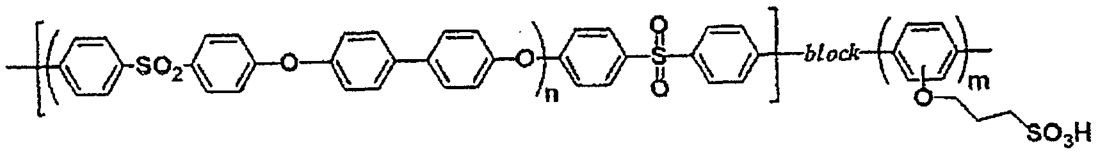

The obtained polyarylene block copolymer was dissolved in N-methylpyrrolidone (NMP) so as to be 10% by weight-concentration, thereafter subjected to cast coating on a glass plate and dried under normal pressure at a temperature of 80°C. Subsequently, the plate was immersed in a 1 mol/L-hydrochloric acid aqueous solution for 2 hours and thereafter washed in running water for 2 hours to thereby obtain a polymer electrolyte membrane 2. The IEC of the obtained polymer electrolyte membrane 2 was 1.8 meq/g.

Production Example 3

Under an argon atmosphere, 12.33 g (35.20 mmol) of 9,9-bis(4-hydroxydiphenyl)fluorine, 3.84 g (17.60 mmol) of 4,4'-difluorobenzophenone, 8.00 g (17.60 mmol) of dipotassium 4,4'-difluorobenzophenone-3,3'-disulfonate, 5.11 g (36.96 mmol) of potassium carbonate, 94 ml of DMSO and 44 ml of toluene were added and stirred to a flask with a distilling tube. Subsequently, the bath temperature was heated up to 200°C to subject moisture in the system to azeotropic dehydration by distilling off toluene with heat. After distilling off toluene, the reaction was performed at the same temperature for 3 hours. After standing to cool, the reaction mixture was added dropwise into a large amount of a 2 mol/L-hydrochloric acid aqueous solution to filter and recover the produced precipitate, which was repeatedly washed and filtered in water until the wash liquid became neutrality. Subsequently, a treatment with large excessive hot water for 1 hour was repeated twice to thereafter obtain 19.26 g of the following intended polymer electrolyte by drying under reduced pressure. The number-average molecular weight of this polymer electrolyte was 54000 and the weight-average molecular weight was 119000.

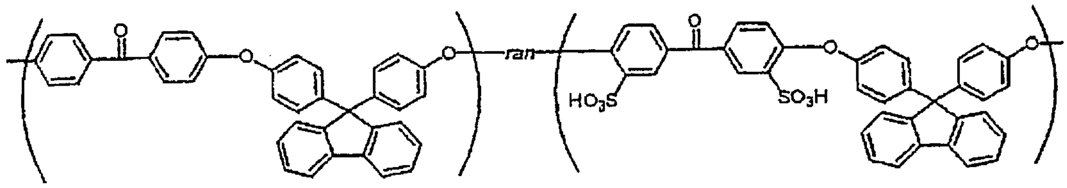

The obtained polyarylene block copolymer was dissolved in DMAc so as to be 25% by weight-concentration, thereafter subjected to cast coating on a glass plate and dried under normal pressure at a temperature of 80°C. Subsequently, the plate was immersed in a 1 mol/L-hydrochloric acid aqueous solution for 2 hours and thereafter washed in running water for 2 hours to thereby obtain a polymer electrolyte membrane 3. The IEC of the obtained polymer electrolyte membrane 3 was 1.5 meq/g. The representation "ran" means a random copolymer in the above formula.

Production Example 4

Under an argon atmosphere, 19.05 g (56.28 mmol) of 3,3'-diphenyl-4,4'-dihydroxybiphenyl, 12.53 g (49.28 mmol) of 4,4'-difluorodiphenylsulfone, 8.56 g (61.91 mmol) of potassium carbonate, 126 ml of DMSO and 50 ml of toluene were added and stirred to a flask with a distilling tube. Subsequently, the bath temperature was heated up to 150°C to subject moisture in the system to azeotropic dehydration by distilling off toluene with heat.

After distilling off toluene, the reaction was performed at the same temperature for 10 hours. This was defined as reaction mass A.

Under an argon atmosphere, 8.00 g (35.05 mmol) of potassium hydroquinonesulfonate, 19.12 g (42.06 mmol) of dipotassium 4,4'-difluorobenzophenone-3,3'-disulfonate, 5.09 g (36.80 mmol) of potassium carbonate, 108 ml of DMSO and 47 ml of toluene were added and stirred to a flask with a distilling tube. Subsequently, the bath temperature was heated up to 150°C to subject moisture in the system to azeotropic dehydration by distilling off toluene with heat.

After distilling off toluene, the reaction was performed at the same temperature for 16 hours and 30 minutes. This was defined as reaction mass B.

The above-mentioned reaction mass A and reaction mass B were mixed while diluted with 20 ml of DMSO to react this mixed solvent at a temperature of 150°C for 27 hours and 30 minutes. After standing to cool, the reaction mixture was added dropwise into a large amount of a 2 mol/L-hydrochloric acid aqueous solution to filter and recover the produced precipitate, which was repeatedly washed and filtered in water until the wash liquid became neutral. Subsequently, a treatment with large excessive hot water for 1 hour was repeated twice to thereafter obtain 40.96 g of the following intended polymer electrolyte by drying under reduced pressure. The number-average molecular weight of this polymer electrolyte was 22000 and the weight-average molecular weight was 86000. The representation "block" means a block copolymer in the following formula.

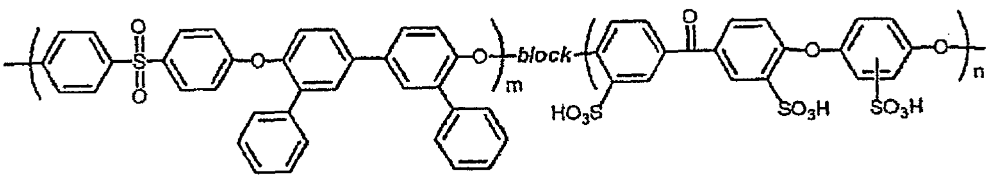

The obtained polymer electrolyte was dissolved in NMP so as to be 20% by weight-concentration, thereafter subjected to cast coating on a glass plate and dried under normal pressure at a temperature of 80°C. Subsequently, the plate was immersed in a 1 mol/L-hydrochloric acid aqueous solution for 2 hours and thereafter washed in running water for 2 hours to thereby obtain a polymer electrolyte membrane 4. The IEC of the obtained polymer electrolyte membrane 4 was 1.8 meq/g.

Production Example 5

Under an argon atmosphere, 399 ml of DMSO, 200 ml of toluene, 16.00 g (64.24 mmol) of sodium 2,5-dichlorobenzenesulfonate, 7.10 g of the following polyether sulfone of terminal chloro type

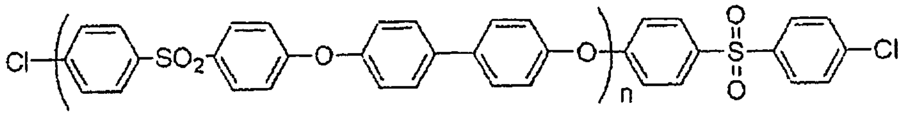

(polyphenylsulfone, manufactured by Aldrich Corp.) and 27.59 g (176.67 mmol) of 2,2'-bipyridyl were put and stirred in a flask equipped with an azeotropic distillation apparatus. Thereafter, the bath temperature was heated up to 150°C to subject moisture in the system to azeotropic dehydration by distilling off toluene with heat, and thereafter cooled to a temperature of 65°C. Subsequently, 44.18 g (160.61 mmol) of bis(1,5-cyclooctadiene)nickel (0) was added thereto, heated to a temperature of 80°C and stirred at the same temperature for 3 hours. After standing to cool, the reaction liquid was poured into a large amount of methanol to thereby precipitate a polymer, which was filtered. The obtained crude polymer was dispersed and filtered in a 6 mol/L-hydrochloric acid aqueous solution. After the same process was repeated several times, the polymer was dispersed and filtered in a large amount of methanol. After the same work was repeated several times, the obtained polymer was dried. Thereafter, the obtained crude polymer was dissolved in NMP, and poured into a large amount of a 6 mol/L-hydrochloric acid aqueous solution to thereby reprecipitate and purify a polymer. In addition, the processes for washing and filtering by a 6 mol/L-hydrochloric acid aqueous solution were repeated several times to thereafter repeat washing and filtering in water until the wash liquid became neutrality. Subsequently, a treatment with large excessive hot water for 1 hour was repeated twice to thereafter obtain 10.46 g of an intended block copolymer by drying under reduced pressure. The number-average molecular weight of this block copolymer was 61000 and the weight-average molecular weight was 218000. The representation "block" means a block copolymer in the following formula.

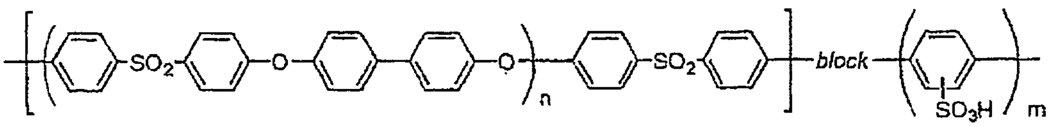

The obtained polymer electrolyte was dissolved in NMP so as to be 12% by weight-concentration, thereafter subjected to cast coating on a glass plate and dried under normal pressure at a temperature of 80°C. Subsequently, the plate was immersed in a 1 mol/L-hydrochloric acid aqueous solution for 2 hours and thereafter washed in running water for 2 hours to thereby obtain a polymer electrolyte membrane 5. The IEC of the obtained polymer electrolyte membrane 5 was 2.3 meq/g.

Example 1

In an autoclave, 400 mg of the polymer electrolyte membrane 1 obtained in Production Example 1 was set, while immersed in 80 mL of a 0.2 mol/L-magnesium sulfate aqueous solution, which autoclave was put and heated in an oven at a temperature of 150°C (magnesium (II) ion amount is so large excessive with respect to the ion exchange capacity of the polymer electrolyte membrane 1 that the salt substitution ratio is approximately 100%). The membrane was taken out after 33 hours, immersed in a 1 mol/L-hydrochloric acid aqueous solution and a 1 mol/L-sulfuric acid aqueous solution for 3 hours each, and washed in running water for 3 hours. The proton conductivity and methanol diffusion coefficient of the obtained polymer electrolyte membrane were measured. The results are shown in Table 1.

Examples 2 and 3

The same experiment as Example 1 was performed except for replacing the magnesium sulfate aqueous solution in Example 1 with the following solutions. The results are shown in Table 1. The calcium (II) ions and barium (II) ions are both used so large excessively that the salt substitution ratio is approximately 100%.

Example 2 0.2 mol/L-calcium chloride aqueous solution Example 3 0.2 mol/L-barium chloride aqueous solution

Examples 4 to 7

The same experiment as Example 1 was performed except for replacing the heating temperature and heating time in Example 1 with the following conditions. The results are shown in Table 1.

Example 4 heating temperature: 120°C, heating time: 62 hours

Example 5 heating temperature: 100°C, heating time: 33 hours

Example 6 heating temperature: 80°C, heating time: 33 hours

Example 7 heating temperature: 40°C, heating time: 302 hours

Example 8

In 80 mL of a 0.2 mol/L-calcium chloride aqueous solution, 400 mg of the polymer electrolyte membrane 1 obtained in Production Example 1 was immersed for 2 hours (calcium (II) ion amount is so large excessive with respect to the ion exchange capacity of the polymer electrolyte membrane 1 that the salt substitution ratio is approximately 100%). Thereafter, the polymer electrolyte membrane after being treated was washed in running water for 3 hours to remove excessive calcium chloride, and thereafter the membrane was set in an autoclave while immersed in 80 mL of pure water, which autoclave was put and heated in an oven at a temperature of 150°C. The membrane was taken out after 15 hours, immersed in 1 mol/L-hydrochloric acid and 1 mol/L-sulfuric acid for 3 hours each, and washed in running water for 3 hours. The proton conductivity and methanol diffusion coefficient of the obtained polymer electrolyte membrane were measured. The results are shown in Table 1.

Example 9

In 200 mL of an aqueous solution in which 322 mg of calcium chloride was dissolved, 3.3 g of the polymer electrolyte membrane 1 obtained in Production Example 1 was immersed for 2 hours (calcium (II) ion amount is 0.8 equivalent with respect to the ion exchange capacity of the polymer electrolyte membrane 1). Thereafter, the polymer electrolyte membrane after being treated was washed in running water for 3 hours to remove excessive calcium chloride, and thereafter the membrane was set in an autoclave while immersed in 80 mL of pure water, which autoclave was put and heated in an oven at a temperature of 150°C. The membrane was taken out after 8 hours, immersed in a 1 mol/L-hydrochloric acid aqueous solution and a 1 mol/L-sulfuric acid aqueous solution for 3 hours each, and washed in running water for 3 hours. The proton conductivity and methanol diffusion coefficient of the obtained polymer electrolyte membrane were measured. The results are shown in Table 1.

Example 10

In 200 mL of aqueous solution in which 171 mg of calcium chloride was dissolved, 2.8 g of the polymer electrolyte membrane 1 obtained in Production Example 1 was immersed for 2 hours (calcium (II) ion amount is 0.5 equivalent with respect to the ion exchange capacity of the polymer electrolyte membrane 1). Thereafter, the polymer electrolyte membrane after being treated was washed in running water for 3 hours to remove excessive calcium chloride, and thereafter the membrane was set in an autoclave while immersed in 80 mL of pure water, which autoclave was put and heated in an oven at a temperature of 150°C. The membrane was taken out after 8 hours, immersed in a 1 mol/L-hydrochloric acid aqueous solution and a 1 mol/L-sulfuric acid aqueous solution for 3 hours each, and washed in running water for 3 hours. The proton conductivity and methanol diffusion coefficient of the obtained polymer electrolyte membrane were measured. The results are shown in Table 1.

Example 11

A polymer electrolyte membrane was obtained by performing in the same manner as Example 8 except for replacing the calcium chloride aqueous solution in Example 8 with an aluminum sulfate aqueous solution and shifting the heating time from 15 hours to 6 hours (aluminum (III) ion amount is so large excessive with respect to the ion exchange capacity of the polymer electrolyte membrane 1 that the salt substitution ratio is approximately 100%).

The proton conductivity and methanol diffusion coefficient of the obtained polymer electrolyte membrane were measured. The results are shown in Table 1.

Comparative Example 1

The polymer electrolyte membrane 1 obtained in Production Example 1 was directly subjected to the measurement of the proton conductivity and methanol diffusion coefficient. The results are shown in Table 1.

Comparative Example 2

The experiment was performed in the same manner as Example 1 except for replacing the magnesium sulfate aqueous solution in Example 1 with ultrapure water; however, the membrane became so thin and fragile that the measurement of the proton conductivity and methanol diffusion coefficient could not be performed.

Comparative Example 3

In 80 mL of a 0.2 mol/L-calcium chloride aqueous solution, 400 mg of the polymer electrolyte membrane 1 obtained in Production Example 1 was immersed for 2 hours (calcium (II) ion amount is so large excessive with respect to the ion exchange capacity of the polymer electrolyte membrane 1 that the salt substitution ratio is approximately 100%). The polymer electrolyte membrane after being treated was washed in running water for 3 hours to remove excessive calcium chloride, and the membrane was immersed in water at room temperature for 6 hours. Thereafter, the membrane was immersed in a 1 mol/L-hydrochloric acid aqueous solution and a 1 mol/L-sulfuric acid aqueous solution for 3 hours each, and washed in running water for 3 hours. The proton conductivity and methanol diffusion coefficient of the obtained polymer electrolyte membrane were measured. The results are shown in Table 1.

Example 12

In 80 mL of a 0.2 mol/L-calcium chloride aqueous solution, 400 mg of the polymer electrolyte membrane 1 obtained in Production Example 1 was immersed for 2 hours (calcium (II) ion amount is so large excessive with respect to the ion exchange capacity of the polymer electrolyte membrane 1 that the salt substitution ratio is approximately 100%). Thereafter, the polymer electrolyte membrane after being treated was washed in running water for 3 hours to remove excessive calcium chloride, and thereafter the membrane was stuck to a glass plate and heated in an oven at a temperature of 200°C for 2 hours. Thereafter, the membrane was immersed in a 1 mol/L-hydrochloric acid aqueous solution and a 1 mol/L-sulfuric acid aqueous solution for 3 hours each, and washed in running water for 3 hours. The proton conductivity and methanol diffusion coefficient of the obtained polymer electrolyte membrane were measured. The results are shown in Table 1.

[Table 1]

| | σ | D | D/σ | Ratio to Comparative Example 1 (*1) |
|---|---|---|---|---|
| | S/cm | $cm^2/s$ | $cm^3/(S.s)$ | % |
| Example 1 | $4.7 \times 10^{-2}$ | $4.3 \times 10^{-7}$ | $9.1 \times 10^{-6}$ | 50 |
| Example 2 | $1.3 \times 10^{-2}$ | $1.1 \times 10^{-7}$ | $8.6 \times 10^{-6}$ | 47 |
| Example 3 | $5.2 \times 10^{-3}$ | $5.2 \times 10^{-8}$ | $1.0 \times 10^{-5}$ | 55 |
| Example 4 | $6.0 \times 10^{-3}$ | $7.0 \times 10^{-8}$ | $1.2 \times 10^{-5}$ | 64 |
| Example 5 | $4.7 \times 10^{-3}$ | $6.6 \times 10^{-8}$ | $1.4 \times 10^{-5}$ | 77 |
| Example 6 | $5.8 \times 10^{-3}$ | $9.2 \times 10^{-8}$ | $1.6 \times 10^{-5}$ | 87 |
| Example 7 | $7.2 \times 10^{-3}$ | $1.1 \times 10^{-7}$ | $1.5 \times 10^{-5}$ | 83 |
| Example 8 | $1.4 \times 10^{-2}$ | $9.3 \times 10^{-8}$ | $6.7 \times 10^{-6}$ | 36 |
| Example 9 | $9.8 \times 10^{-3}$ | $8.3 x 10^{-8}$ | $8.4 x 10^{-6}$ | 46 |
| Example 10 | $9.2 \times 10^{-3}$ | $8.5 \times 10^{-8}$ | $9.1 \times 10^{-6}$ | 50 |
| Example 11 | $1.5 \times 10^{-2}$ | $1.1 \times 10^{-7}$ | $7.2 \times 10^{-6}$ | 39 |
| Example 12 | $9.3 \times 10^{-3}$ | $1.1 \times 10^{-7}$ | $1.2 \times 10^{-5}$ | 66 |
| Comparative Example 1 | $6.8 \times 10^{-3}$ $6.8 \times 10^{-3}$ | $1.2 \times 10^{-7}$ $1.2 \times 10^{-7}$ | $1.8 \times 10^{-5}$ $1.8 \times 10^{-5}$ | 100 |
| Comparative Example 3 | $9.1 \times 10^{-3}$ | $1.7 \times 10^{-7}$ | $1.9 \times 10^{-5}$ | 102 |
| *1 When D/σ of Comparative Example 1 is regarded as 100%, values obtained by comparing D/σ of other Examples and Comparative Examples therewith are regarded as a "ratio to Comparative Example 1". | | | | |

It was proved from the results shown in Table 1 that the D/σ value in each of the polymer electrolyte membranes obtained by a production method of the present invention is decreased as compared with Comparative Example 1 and the polymer electrolyte membranes in which the proton conductivity and methanol diffusion coefficient are preferable for a DMFC are obtained.

Example 13

In an autoclave, 400 mg of the polymer electrolyte membrane 2 obtained in Production Example 2 was set, while immersed in 80 mL of a 0.2 mol/L-magnesium sulfate aqueous solution, which autoclave was put in an oven at a temperature of 150°C (magnesium (II) ion amount is so large excessive with respect to the ion exchange capacity of the polymer electrolyte membrane 2 that the salt substitution ratio is approximately 100%). The membrane was taken out after 48 hours, immersed in a 1 mol/L-hydrochloric acid aqueous solution and a 1 mol/L-sulfuric acid aqueous solution for 3 hours each, and washed in running water for 3 hours. The proton conductivity and methanol diffusion coefficient of the obtained polymer electrolyte membrane were measured. The results are shown in Table 2.

Examples 14 and 15

The same experiment as Example 13 was performed except for replacing the magnesium sulfate aqueous solution in Example 13 with the following solutions. The results are shown in Table 2. The calcium (II) ions and barium (II) ions are both used so large excessively that the salt substitution ratio is approximately 100%.

Example 14 0.2 mol/L-calcium chloride aqueous solution Example 15 0.2 mol/L-barium chloride aqueous solution

Example 16

The same experiment as Example 13 was performed except for shifting the heating time in Example 13 from 48 hours to 4.5 hours. The results are shown in Table 2.

Comparative Example 4

The polymer electrolyte membrane 2 obtained in Production Example 2 was directly subjected to the measurement of the proton conductivity and methanol diffusion coefficient. The results are shown in Table 2.

Comparative Example 5

The experiment was performed in the same manner as Example 13 except for replacing the magnesium sulfate aqueous solution in Example 13 with ultrapure water; however, the membrane became so thin and fragile that the measurement of the proton conductivity and methanol diffusion coefficient could not be performed.

Comparative Example 6

The same experiment as Example 10 was performed except for replacing the magnesium sulfate aqueous solution in Example 13 with a 0.4 mol/L-potassium chloride aqueous solution. The potassium (I) ions are used so large excessively that the salt substitution ratio is approximately 100%. The results are shown in Table 2.

[Table

| | σ | D | D/σ | Ratio to Comparative Example 4 (*2) |
|---|---|---|---|---|
| | S/cm | $cm^2/s$ | $cm^3/(S\cdot s)$ | % |
| Example 13 | $3.1 \times 10^{-2}$ | $2.5 \times 10^{-7}$ | $8.2 \times 10^{-6}$ | 74 |
| Example 14 | $1.4 \times 10^{-2}$ | $9.8 \times 10^{-8}$ | $7.3 \times 10^{-6}$ | 66 |
| Example 15 | $9.2 \times 10^{-3}$ | $5.7 \times 10^{-8}$ | $6.2 \times 10^{-6}$ | 56 |
| Example 16 | $9.8 \times 10^{-3}$ | $8.8 \times 10^{-8}$ | $9.0 \times 10^{-6}$ | 81 |
| Comparative | $8.2 \times 10^{-3}$ | $9.0 \times 10^{-8}$ | $1.1\times 10^{-5}$ | 100 |
| Comparative Example 6 | $10^{-2}$ $5.9 \times 10^{-2}$ | $10^{-7}$ $7.1 \times 10^{-7}$ | $10^{-5}$ $1.2 \times 10^{-5}$ | 109 |

*2 When D/σ of Comparative Example 4 is regarded as 100%, values obtained by comparing D/σ of other Examples and Comparative Examples therewith are regarded as a "ratio to Comparative Example 4".

It was proved from the results shown in Table 2 that the D/σ value in each of the polymer electrolyte membranes obtained by a production method of the present invention is decreased as compared with Comparative Example 4 and the polymer electrolyte membranes in which the proton conductivity and methanol diffusion coefficient are preferable for a DMFC are obtained. Additionally the preferable effect may not be obtained in Comparative Example 6 even though sulfonic groups (cation exchange groups) of the polymer electrolyte are ion-exchanged for potassium ions as monovalent cations

Example 17

In an autoclave, 400 mg of the polymer electrolyte membrane 3 obtained in Production Example 3 was set while immersed in 80 mL of a 0.2 mol/L-calcium chloride aqueous solution, which autoclave was put in an oven at a temperature of 150°C (calcium (II) ion amount is so large excessive with respect to the ion exchange capacity of the polymer electrolyte membrane 3 that the salt substitution ratio is approximately 100%). The membrane was taken out after 7 hours, immersed in a 1 mol/L-hydrochloric acid aqueous solution and a 1 mol/L-sulfuric acid aqueous solution for 3 hours each, and washed in running water for 3 hours. The proton conductivity and methanol diffusion coefficient of the obtained polymer electrolyte membrane were measured. The results are shown in Table 3.

Comparative Example 7

The polymer electrolyte membrane 3 obtained in Production Example 3 was directly subjected to the measurement of the proton conductivity and methanol diffusion coefficient. The results are shown in Table 3.

[Table 3]

| | σ | D | D/σ | Ratio to Comparative Example 7 (*3) |
|---|---|---|---|---|
| | S/cm | $cm^2$ / s | $cm^3/(S\cdot s)$ | % |
| Example 17 | $4.6 \times 10^{-2}$ | $4.4 \times 10^{-7}$ | $9.5 \times 10^{-6}$ | 85 |
| Comparative Example 7 | $3.0 \times 10^{-2}$ | $3.3 \times 10^{-7}$ | $1.1 \times 10^{-5}$ | 100 |
| *3 When D/σ of Comparative Example 7 is regarded as 100%, the value obtained by comparing D/o of Example 17 therewith is regarded as a "ratio to Comparative Example 7". | | | | |

It was proved from the results shown in Table 3 that the D/σ value in the polymer electrolyte membrane obtained by a production method of the present invention is decreased as compared with Comparative Example 7 and the polymer electrolyte membrane in which the proton conductivity and methanol diffusion coefficient are preferable for a DMFC is obtained.

Example 18

In an autoclave, 400 mg of the polymer electrolyte membrane 4 obtained in Production Example 4 was set while immersed in 80 mL of a 0.2 mol/L-barium chloride aqueous solution, which autoclave was put in an oven at a temperature of 120°C. The membrane was taken out after 24 hours, immersed in a 1 mol/L-hydrochloric acid aqueous solution and a 1 mol/L-sulfuric acid aqueous solution for 3 hours each, and washed in running water for 3 hours. The proton conductivity and methanol diffusion coefficient of the obtained polymer electrolyte membrane were measured. The results are shown in Table 4.

Comparative Example 8

The polymer electrolyte membrane 4 obtained in Production Example 4 was directly subjected to the measurement of the proton conductivity and methanol diffusion coefficient.

[Table 4]

| | σ | D | D/σ | Ratio to Comparative Example 8 (*4) |
|---|---|---|---|---|
| | S/cm | $cm^2/s$ | $cm^3/(S\cdot s)$ | % |
| Example 18 | $3.3 \times 10^{-2}$ | $2.3 \times 10^{-7}$ | $6.9 \times 10^{-6}$ | 71 |

(continued)

| | σ | D | D/σ | Ratio to Comparative Example 8 (*4) |
|---|---|---|---|---|
| | S/cm | $cm^2/s$ | $cm^3/(S \cdot s)$ | % |
| Example 8 | $3.0 \times 10^{-2}$ | $2.9 \times 10^{-7}$ | $9.6 \times 10^{-6}$ | 100 |
| *4 When D/σ of Comparative Example 8 is regarded as 100%, the value obtained by comparing D/σ of Example 18 therewith is regarded as a "ratio to Comparative Example 8". | | | | |

It was proved from the results shown in Table 4 that the D/σ value in the polymer electrolyte membrane obtained by a production method of the present invention is decreased as compared with Comparative Example 8 and the polymer electrolyte membrane in which the proton conductivity and methanol diffusion coefficient are preferable for a DMFC is obtained.

Example 19

400 mg of the polymer electrolyte membrane 5 obtained in Production Example 5 was immersed in 80 mL of a 0.2 mol/L-calcium chloride aqueous solution for 2 hours (calcium (II) ion amount is so large excessive with respect to the ion exchange capacity of the polymer electrolyte membrane 1 that the salt substitution ratio is approximately 100%). Thereafter, the polymer electrolyte membrane after being treated was washed in running water for 3 hours to remove excessive calcium chloride, and thereafter the membrane was set in an autoclave while immersed in 80 mL of pure water, which autoclave was put and heated in an oven at a temperature of 150°C. The membrane was taken out after 8 hours, immersed in a 1 mol/L-hydrochloric acid aqueous solution and a 1 mol/L-sulfuric acid aqueous solution for 3 hours each, and washed in running water for 3 hours. The proton conductivity and methanol diffusion coefficient of the obtained polymer electrolyte membrane were measured. The results are shown in Table 5.

Comparative Example 9

The polymer electrolyte membrane 5 obtained in Production Example 5 was directly subjected to the measurement of the proton conductivity and methanol diffusion coefficient.

As a result of the proton conductivity (σ) and methanol diffusion coefficient (D) of the above-mentioned Example 19 and Comparative Example 9, comparison with Comparative Example 9 in which a production method of the present invention was not performed (ratio of other Examples and Comparative Examples in the case of regarding D/σ of Comparative Example 9 as 100%) is shown with the calculated D/σ value.

[Table 5]

| | σ | D | D/σ | Ratio to Comparative Example 9 (*5) |
|---|---|---|---|---|
| | S/cm | $cm^2/s$ | $cm^3/(S \cdot s)$ | % |
| Example 19 | $1.2 \times 10^{-}$ | 8 $9.5 \times 10^{-}$ | $8.0 \times {}^{10-}$ | 69 |
| Comparative Example 9 | $1.2 \times 10^{-}$ 2 | $1.3 \times 10^{-}$ 7 | $1.1 \times 10^{-}$ 5 | 100 |
| *5 When D/σ of Comparative Example 9 is regarded as 100%, the value obtained by comparing D/σ of Example 19 therewith is regarded as a "ratio to Comparative Example 9". | | | | |

Example 20

A membrane-electrode assembly was produced by using the polymer electrolyte membrane obtained in Example 19 to perform fuel cell characteristic evaluation. The results are shown in Table 6.

Comparative Example 10

A membrane-electrode assembly was produced by using the polymer electrolyte membrane of Comparative Example 9 to perform fuel cell characteristic evaluation. The results are shown in Table 6.

[Table 6]

| | Maximum output density |
|---|---|
| | mW / $cm^2$ |
| Example 20 | 45.3 |
| Comparative Example 10 | 40.7 |

It was proved from the above results that methanol diffusion coefficient and the proton conductivity in the polymer electrolyte membrane obtained by a production method of the present invention are extremely excellent as a proton conductive membrane for a direct methanol fuel cell (DMFC).

A production method of the present invention allows a polymer electrolyte membrane having high-level methanol barrier properties and the proton conductivity without using a means for cross-linking. A DMFC using the polymer electrolyte membrane offers high power generation characteristics, restrains damage to the cell itself due to MCO and may be preferably used for portable equipment.

## Claims

1. A method for producing a polymer electrolyte membrane, wherein a polymer electrolyte composing said polymer electrolyte membrane is an aromatic polymer electrolyte, comprising the step of modifying a polymer electrolyte membrane which is salt-substituted with a polyvalent cation, by a modification treatment selected from a heat treatment, an active energy ray irradiation treatment and a discharge treatment, and the step of treating the modified polymer electrolyte membrane with acid.

2. The method for producing a polymer electrolyte membrane according to Claim 1, wherein said modification treatment is a heat treatment.

3. The method for producing a polymer electrolyte membrane according to Claim 1, wherein said modification treatment is a heat treatment in a temperature range of 40°C to 200°C.

4. The method for producing a polymer electrolyte membrane according to any one of Claims 1 to 3, wherein the salt substitution ratio of said polymer electrolyte membrane which is salt-substituted with a polyvalent cation is 50% or more.

5. The method for producing a polymer electrolyte membrane according to any one of Claims 1 to 4, wherein said polyvalent cation is an alkaline earth metal ion.

6. The method for producing a polymer electrolyte membrane according to any one of Claims 1 to 5, wherein said polyvalent cation contains a calcium (II) ion.

7. The method for producing a polymer electrolyte membrane according to any one of Claims 1 to 6, wherein a polymer electrolyte composing said polymer electrolyte membrane is a block copolymer comprising a block having a cation exchange group and a block having no ion exchange group.

8. A method of producing a membrane-electrode assembly, the method comprising forming a catalyst layer on both sides of the polymer electrolyte membrane obtained according to any one of Claims 1 to 7.

9. The use of the membrane-electrode assembly obtained according to the method of Claim 8 in a direct methanol fuel cell.

## Patentansprüche

1. Ein Verfahren zur Herstellung einer Polymer-Elektrolytmembran, wobei der Polymer-Elektrolyt, aus dem die Polymer-Elektrolytmembran zusammengesetzt ist, ein aromatischer Polymer-Elektrolyt ist, umfassend den Schritt des Modifizierens einer Polymer-Elektrolytmembran, welche durch ein mehrwertiges Kation Salz-substituiert ist, durch eine

Modifizierungsbehandlung, ausgewählt aus einer Wärmebehandlung, einer Behandlung mit einer aktiven Energiebestrahlung und einer Entladungsbehandlung, und den Schritt des Behandelns der modifizierten Polymer-Elektrolytmembran mit Säure.

2. Das Verfahren zur Herstellung einer Polymer-Elektrolytmembran gemäß Anspruch 1, wobei die Modifizierungsbehandlung eine Wärmebehandlung ist.

3. Das Verfahren zur Herstellung einer Polymer-Elektrolytmembran gemäß Anspruch 1, wobei die Modifizierungsbehandlung eine Wärmebehandlung bei einem Temperaturbereich von 40°C bis 200°C ist.

4. Das Verfahren zur Herstellung einer Polymer-Elektrolytmembran gemäß einem der Ansprüche 1 bis 3, wobei das Verhältnis der Salz-Substitution der Polymer-Elektrolytmembran, welcher durch ein mehrwertiges Kation Salz-substituiert ist, 50% oder mehr beträgt.

5. Das Verfahren zur Herstellung einer Polymer-Elektrolytmembran gemäß einem der Ansprüche 1 bis 4, wobei das mehrwertige Kation ein Erdalkalimetallion ist.

6. Das Verfahren zur Herstellung einer Polymer-Elektrolytmembran gemäß einem der Ansprüche 1 bis 5, wobei das mehrwertige Kation ein Calzium-(II)-ion enthält.

7. Das Verfahren zur Herstellung einer Polymer-Elektrolytmembran gemäß einem der Ansprüche 1 bis 6, wobei ein Polymer-Elektrolyt, aus dem die Polymer-Elektrolytmembran zusammengesetzt ist, ein Blockcopolymer ist, das einen Block mit einer Kationenaustauschergruppe und einen Block ohne eine Ionenaustauschergruppe umfasst.

8. Ein Verfahren zur Herstellung einer Membran-Elektroden Anordnung, wobei das Verfahren das Bilden einer Katalysatorschicht auf beiden Seiten der Polymer-Elektrolytmembran, welche gemäß einem der Ansprüche 1 bis 7 erhalten wurde, umfasst.

9. Die Verwendung der Membran-Elektroden Anordnung, welche gemäß dem Verfahren aus Anspruch 8 erhalten wurde, in einer Direktmethanol-Brennstoffzelle.

**Revendications**

1. Procédé de production d'une membrane électrolyte polymère, dans lequel un électrolyte polymère composant ladite membrane électrolyte polymère est un électrolyte polymère aromatique, comprenant l'étape consistant à modifier une membrane électrolyte polymère dont le sel est substitué par un cation polyvalent, par un traitement de modification sélectionné parmi un traitement thermique, un traitement par irradiation par rayons d'énergie active et un traitement de décharge, et l'étape consistant à traiter la membrane électrolyte polymère modifiée avec un acide.

2. Procédé de production d'une membrane électrolyte polymère selon la revendication 1, dans lequel ledit traitement de modification est un traitement thermique.

3. Procédé de production d'une membrane électrolyte polymère selon la revendication 1, dans lequel ledit traitement de modification est un traitement thermique dans une plage de température de 40 °C à 200 °C.

4. Procédé de production d'une membrane électrolyte polymère selon l'une quelconque des revendications 1 à 3, dans lequel la proportion de substitution du sel de ladite membrane électrolyte polymère dont le sel est substitué par un cation polyvalent est de 50 % ou plus.

5. Procédé de production d'une membrane électrolyte polymère selon l'une quelconque des revendications 1 à 4, dans lequel ledit cation polyvalent est un ion de métal alcalino-terreux.

6. Procédé de production d'une membrane électrolyte polymère selon l'une quelconque des revendications 1 à 5, dans lequel ledit cation polyvalent contient un ion calcium (II).

7. Procédé de production d'une membrane électrolyte polymère selon l'une quelconque des revendications 1 à 6, dans lequel un électrolyte polymère composant ladite membrane électrolyte polymère est un copolymère à blocs

comprenant un bloc ayant un groupe d'échange de cations et un bloc n'ayant pas de groupe d'échange d'ions.

**8.** Procédé de production d'un ensemble membrane-électrode, le procédé comprenant la formation d'une couche de catalyseur sur les deux côtés de la membrane électrolyte polymère obtenue selon l'une quelconque des revendications 1 à 7.

**9.** Utilisation de l'ensemble membrane-électrode obtenu selon le procédé de la revendication 8 dans une pile à combustible directe au méthanol.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005243492 A
- JP 9110982 A
- JP 11116679 A
- JP 2001250567 A
- JP 2005171025 A
- JP 2004319139 A

### Non-patent literature cited in the description


- *J. Appl. Polym. Sci.,* 1974, vol. 18, 1969
- HYOUMEN KAISEKI KAISITU NO KAGAKU. NIKKAN KOGYO SHIMBUN, LTD, 19 December 2003
- *J. Electrochem. Soc.: Electrochemical Science and Technology,* 1988, vol. 135 (9), 2209
- polymer chemistry (II). SHIN JIKKEN KAGAKU KOUZA. Maruzen Co., Ltd, vol. 19, 992